# EUROPEAN PATENT SPECIFICATION

(11) **EP 1 973 813 B1**
(45) Date of publication and mention of the grant of the patent: **11.05.2011**
(21) Application number: 06829684.7
(22) Date of filing: 09.12.2006
(51) Int. Cl.: B65G 15/02, B65G 15/46, B65G 15/56, B29D 29/06

(54) **CONVEYOR BELT**
FÖRDERBAND
BANDE TRANSPORTEUSE

(30) Priority: 23.12.2005 DE 102005061971
(43) Date of publication of application: 01.10.2008
(73) Proprietor: TRANSNORM SYSTEM GmbH, 31177 Harsum (DE)
(72) Inventor: WALTER, Detlef, 30855 Langenhagen (DE)
(74) Representative: Siekmann, Gunnar
(86) International application number: PCT/EP2006/012160
(87) International publication number: WO 2007/073898

(56) References cited:
- EP-A- 1 129 966
- EP-B1- 1 299 295
- GB-A- 1 042 287
- JP-A- 2004 262 565
- US-A1- 550 517
- US-A1- 4 667 812

## Description

The invention relates to a conveyor belt comprising at least one belt edge arranged at one edge of the conveyor belt, whereby belt edge has a bead-like elevation, and the belt edge has two arms, which form a receiving pocket for the conveyor belt.

Such a conveyor belt is known from US 4,667,812. This document discloses a conveyor belt with protective means in protective surrounding relationship with respect to the lateral edges of the conveyor belt. These protective means consists of three layers, whereby the intermediate layer is provided with reinforcing means such as wire or braid construction. These protective means have a circular shape with a longitudinal slit. The slit permits the protective means to be expanded radially so as to permit insertion of a lateral edge of the belt and resilient retention of the protective means on the belt edge.

A generic conveyor belt is known, for example, from EP 1 299 295 B1. A conveyor belt with a belt edge is described therein, where the belt edge in an outer partial section is made of a harder material since contact with the guide rollers takes place there. Another conveyor belt with a belt edge is known, for example, from the document US 4,955,466. The belt edges disclosed in these documents also show two different types of belt edges in which the beading against which the guide rollers abut is arranged once in the outer region and once in the inner region of the belt edge. The present invention relates to both these types of belt edge.

The object of the invention is to provide a conveyor belt of the type specified initially which is constructed as particularly stable and long-lived.

This object is achieved with a conveyor belt having the features of claim 1. Advantageous further developments of the invention are described in the dependent claims.

In a conveyor belt comprising at least one belt edge arranged at one edge, in particular a longitudinal side, of the conveyor belt whereby belt edge has a bead-like elevation and the belt edge has two arms, which form a receiving pocket for the conveyor belt, it is important to the invention that threads of a tear-proof material are arranged in the arms of the belt edge in a plane extending parallel to the conveyor belt and whereby the conveyor belt is joined to the arms.

This substantially increases the strength, in particular the tearing strength of the belt edge. Overall the lifetime of the conveyor belt is significantly increased by this means since the belt edge is a particularly highly stressed part of the conveyor belt in the entire system. Preferably not only individual threads but a fabric of a tear-proof material are provided in the belt edge. The threads of the fabric of the tear-proof material are arranged in a plane extending parallel to the conveyor belt. Preferably, one layer of the tear-proof fabric or threads of the tear-proof material is arranged on each side of the conveyor belt in a plane extending parallel to the conveyor belt. Alternatively, a continuous inlay of such a fabric which therefore wraps around the outer conveyor belt edge can be provided in the belt edge. In a preferred embodiment of the invention, a region which directly adjoins the conveyor belt and which is aligned parallel to the conveyor belt has a greater hardness than a region which adjoins this region towards the outside. This particularly reduces the wear of the belt edge. The usually very stiff material of the conveyor belt itself can move inside the belt edge to a certain extent as a result of transverse twisting and thereby results in stressing and wear of the belt from inside. Such wear effects are minimised by the formation of an inner region in direct contact with the conveyor belt, which is made of a harder material that the following region.

The conveyor belt according to the invention is particularly suitable for use in curved belt conveyors.

In a preferred embodiment of the invention, the belt edge is composed of two different parts, namely an inner layer and an outer layer which surrounds this. In this case, the inner layer is made of a harder material and the outer layer is made of a softer material. Both materials are preferably made of polyurethane. However, other materials are also possible. In a particularly preferred embodiment of the invention, the inner region and the outer region are produced by co-extrusion. The belt edge can thus be produced particularly simply and rapidly.

The region of greater hardness preferably completely encloses the conveyor belt within the belt edge. The conveyor belt is naturally constructed as continuous so that the complete enclosure relates to the upper side and lower side of the conveyor belt and also relates to the outer side edge of the conveyor belt arranged in the belt edge. The threads or the fabric described above are preferably arranged in a plane between the inner region of greater hardness and the outer region of lower hardness.

The belt edge forms a bead and furthermore comprises arms which enclose the conveyor belt. In a preferred embodiment, the bead of the belt edge is arranged in the outer region and the arms enclosing the conveyor belt extend inwards into the conveyor belt. In another preferred embodiment, the bead is located at the end of these arms, that is in the region of the conveyor belt itself so that the arms extend outwards from the bead.

A further aspect of the invention consists in providing a belt edge for the conveyor belt described above or for joining to the conveyor belt described above. This can be used in particular as a spare part or as a part for retrofitting. The belt edge is characterised in that threads of a tear-proof material are arranged in the belt edge. Another aspect of the invention consists in providing a belt conveyor with an conveyor belt comprising at least one belt edge having threads of a tear-proof material, which are arranged in the belt edge. Reference is made to the above description with regard to the further embodiments of the conveyor belt.

The invention is explained further hereinafter with reference to a preferred exemplary embodiment shown in the drawings. In detail, the schematic diagrams show in:
- Fig. 1:: a perspective partial view of a belt edge of a conveyor belt according to the invention with pulled-out or cut regions of different width;
- Fig. 2:: a partial section of a belt edge with "transparent" outer region;
- Fig. 3:: a cross-sectional view of the belt edge according to Fig. 1 and 2;
- Fig. 4:: a cross-section view of a belt edge with conveyor belt in a second embodiment of the invention;
- Fig. 5:: a perspective view of a partial region of the belt edge according to Fig. 4:
- Fig. 6:: a cutaway view of a conveyor belt with two belt edges in a third embodiment of the invention;
- Fig. 7:: a perspective view of a section of a belt edge according to Fig. 6.

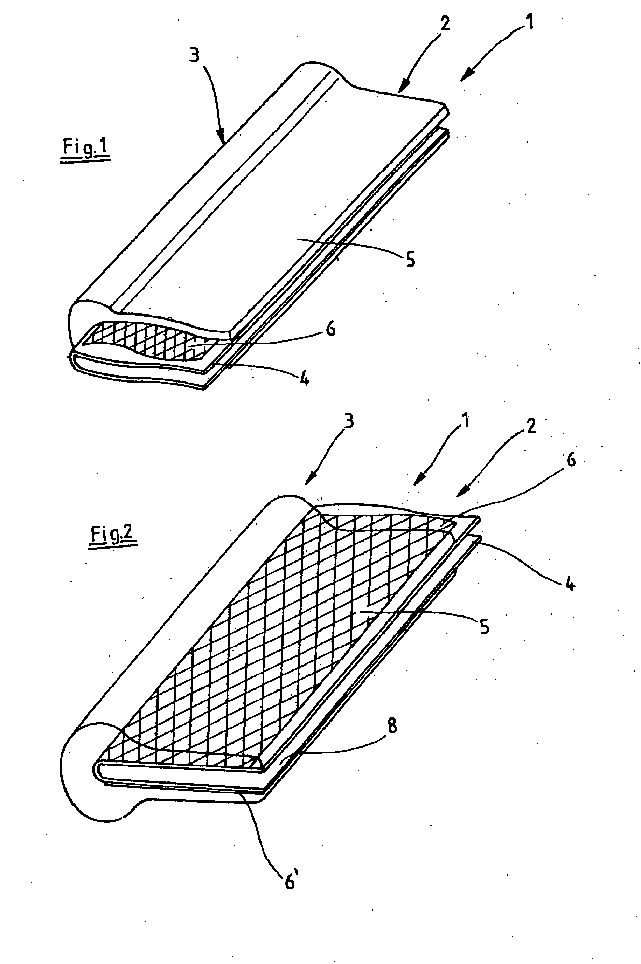

Figure 1 is a perspective view of a belt edge 1 of a conveyor belt. The belt edge 1 in this case comprises a region consisting of two parallel arms 2 which forms a receiving pocket on the inside into which the conveyor belt is inserted. The conveyor belt can then be joined to the belt edge 1, in particular to the arms 2, in particular sewn or glued. In the outer region there is provided a bead-like elevation 3 which serves to abut against conveying rollers. The inner region 4 which is embodied as double-layered in this case, is used to receive the conveyor belt. The inner region 4 is designed to have a greater hardness than the outer region 5. Different polyurethane mixtures can be used for this purpose. The regions are preferably produced by co-extrusion. A fabric is inserted between these regions in this case to increase the tearing strength. This fabric is preferably made of plastic fibres. The inlay 6 is preferably arranged at a short distance from the open edge. As a result, the inlay cannot act as an obstacle at which the objects to be transported can become trapped. In the inner region the fabric 6 is aligned parallel to the conveyor belt, two separate parallel layers of fabric 6 being provided. Alternatively, a single fabric element can also be provided which is embodied such that it surrounds the conveyor belt according to the configuration of the inner region.

Figure 2 shows the section of the belt edge 1 with the arms 2 and the bead 3, the outer region 5 being embodied as transparent in this diagram so that the fabric 6 is completely visible. In the lower region the second fabric layer 6' can be seen below the groove 8 for receiving the conveyor belt. The fabric 6 is located above the conveyor belt and the fabric layer 6' is located below the conveyor belt.

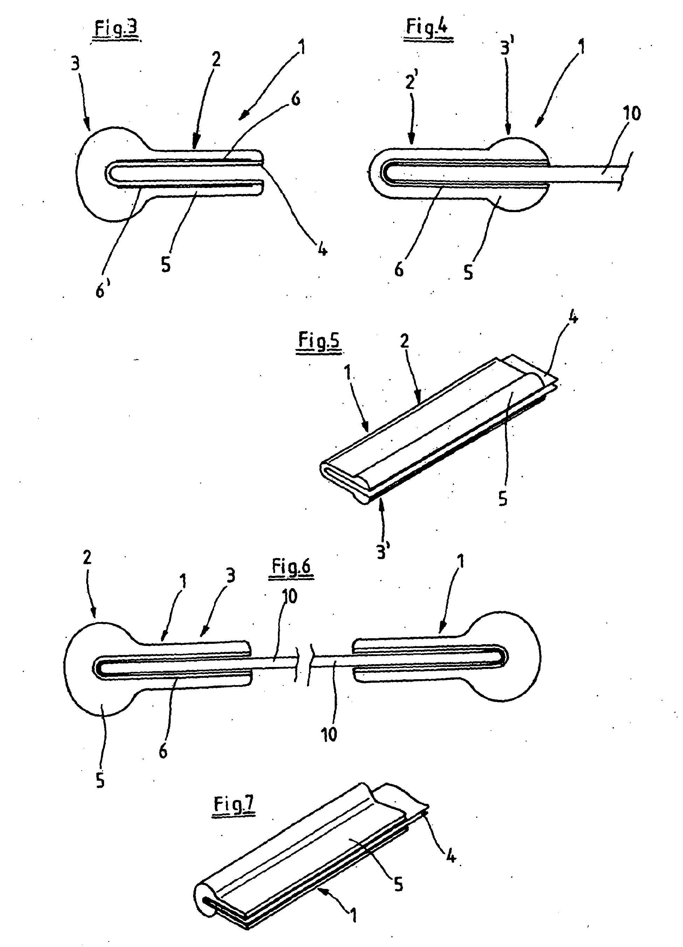

Figure 3 shows a cross-section through the belt edge 1. The same parts are characterised by the same reference numerals. The two inlays 6 and 6' made of fabric to increase the further tearing strength are readily identified here, these being formed on both sides between the inner region 5 of greater hardness and the adjoining region 4 of lower hardness. In this case, the region 4 is preferably embodied as continuous and forms the entire remaining belt edge. It is also feasible to provide additional layers or regions of different hardness in the outer region of the belt edge, as is known from the prior art.

Figure 4 shows a second embodiment of a conveyor belt according to the invention, the conveyor belt 1 being constructed in this case such that the arms 2' are in the outer region of the conveyor belt 10 whilst the bead 3' is arranged at the end of the belt edge 1 on the conveyor belt side. The conveyor belt 10 is inserted in the recess formed by the belt edge 1 and in particular is sewed and/or glued thereto in the region of the arms 2'. In this case, the belt edge 1 also has an inner region 5 made of a harder material, in particular made of a harder-set polyurethane and an outer region 5 made of a softer material, in particular a softer-set polyurethane. The belt edge or the region of the belt edge can also be described as resin mouldings.

Figure 5 shows the belt edge according to Fig. 4 in a perspective view, the inner region 5 being shown as pulled out.

Figure 6 shows a conveyor belt 10 with belt edges 1 on each longitudinal side of the conveyor belt 10. Also in the preceding embodiments, the belt edges 1 can each be arranged on one or both sides, preferably on both sides. Otherwise, the embodiment of the belt edge 1 in Fig. 6 corresponds to the embodiment according to Fig. 3, an inlay 6 being provided in the embodiment according to Fig. 6.

Figure 7 shows a corresponding three-dimensional representation of the belt edge 1 from Fig. 6. The inner region of greater hardness and the outer region of lower hardness can also be identified therein.

## Claims

1. A conveyor belt comprising at least one belt edge (1) arranged at one edge of the conveyor belt (10), whereby belt edge has a bead-like elevation (3, 3'), and the belt edge (1) has two arms (2, 2'), which form a receiving pocket for the conveyor belt.
**characterised in that**,
threads of a tear-proof material are arranged in the arms (2,2') of the belt edge in a plane extending parallel to the conveyor belt (10) and whereby the conveyor belt is joined to the arms (2, 2')

2. The conveyor belt according to claim 1, **characterised in that** the threads form a fabric (6, 6').

3. The conveyor belt according to any one of the preceding claims, **characterised in that** the threads are arranged as an inlay in the belt edge (1).

4. The conveyor belt according to any one of the preceding claims, **characterised in that** a region (4) which directly adjoins the conveyor belt (10) and which is aligned parallel to the conveyor belt has a greater hardness than a region (5) which adjoins this region (4) towards the outside.

5. The conveyor belt according to claim 4, **characterised in that** the region of greater hardness (4) encloses the conveyor belt (10) inside the belt edge (1).

6. The conveyor belt according to any one of claims 4 or 5, **characterised in that** the belt edge (1) is composed of two different parts (4, 5).

7. The conveyor belt according to any one of claims 4 to 6, **characterised in that** the belt edge (1) having the region of lower hardness (5) and the region of greater hardness (6) is formed by co-extrusion.

8. The conveyor belt according to any one of the preceding claims, **characterised in that** the threads of the tear-proof material are arranged in a plane between the region of greater hardness (4) and the region of lower hardness (5).

9. A belt edge for joining to a conveyor belt, according to one of the proceeding claims, **characterised in that** threads of a tear-proof material are arranged in the belt edge.

10. Belt conveyor with at least one conveyor belt (10) according to one of the claims 1 to 8, comprising at least one belt edge (1) arranged at one edge of the conveyor belt (10), **characterised in that** threads of a tear-proof material are arranged in the belt edge (1).

## Patentansprüche

1. Förderband mit mindestens einer an einer Kante des Förderbandes (10) angeordneten Gurtkante (1), wobei die Gurtkante eine wulstartige Erhebung (3, 3') und die Gurtkante (1) zwei Arme (2, 2') aufweist, die eine Aufnahmetasche für das Förderband bilden,
**dadurch gekennzeichnet,**
**dass** Fäden eines reißfesten Materials in den Armen (2, 2') der Gurtkante in einer sich parallel zum Förderband (10) erstreckenden Ebene angeordnet sind und wobei das Förderband mit den Armen (2, 2') verbunden ist.

2. Förderband nach Anspruch 1, **dadurch gekennzeichnet, dass** die Fäden ein Gewebe (6, 6') ausbilden.

3. Förderband nach einem der Ansprüche 1 oder 2, **dadurch gekennzeichnet, dass** die Fäden als Einlage in der Gurtkante (1) angeordnet sind.

4. Förderband nach einem der vorhergehenden Ansprüche, **dadurch gekennzeichnet, dass** ein unmittelbar am Förderband (10) anliegender, parallel zum Förderband ausgerichteter Bereich (4) eine größere Härte aufweist als ein sich an diesen Bereich (4) nach außen anschließender Bereich (5).

5. Förderband nach Anspruch 4, **dadurch gekennzeichnet, dass** der Bereich größerer Härte (4) das Förderband (10) innerhalb der Gurtkante (1) umschließt.

6. Förderband nach einem der Ansprüche 4 oder 5, **dadurch gekennzeichnet, dass** die Gurtkante (1) aus zwei verschiedenen Teilen (4, 5) zusammengesetzt ist.

7. Förderband nach einem der Ansprüche 4 bis 6, **dadurch gekennzeichnet, dass** die Gurtkante (1) mit dem Bereich geringerer Härte (5) und dem Bereich größerer Härte (6) durch Koextrudieren hergestellt ist.

8. Förderband nach einem der vorhergehenden Ansprüche, **dadurch gekennzeichnet, dass** die Fäden des reißfesten Materials in einer Ebene zwischen dem Bereich größerer Härte (4) und dem Bereich geringerer Härte (5) angeordnet sind.

9. Gurtkante zur Verbindung mit einem Förderband, **dadurch gekennzeichnet, dass** in der Gurtkante Fäden eines reißfesten Materials angeordnet sind.

10. Gurtförderer mit mindestens einem Förderband (10) nach einem der Ansprüche 1 bis 8, mit mindestens einer Gurtkante (1), die an einer Kante des Förderbandes (10) angeordnet ist, **dadurch gekennzeichnet, dass** Fäden eines reißfesten Materials in der Gurtkante (1) angeordnet sind.

## Revendications

1. Bande transporteuse comprenant au moins un bord de bande (1) agencé sur un bord de la bande transporteuse (10), le bord de bande présentant une élévation en forme de boudin (3, 3'), et le bord de bande (1) présentant deux bras (2, 2') qui forment une poche réceptrice pour la bande transporteuse,
**caractérisée en ce que**
des fils d'un matériau résistant à la déchirure sont agencés dans les bras (2, 2') du bord de bande dans un plan s'étendant parallèlement à la bande transporteuse (10) et par lequel la bande transporteuse est jointe aux bras (2, 2').

2. Bande transporteuse selon la revendication 1, **caractérisée en ce que** les fils forment un tissu (6, 6').

3. Bande transporteuse selon l'une quelconque des revendications précédentes, **caractérisée en ce que** les fils sont agencés en une incrustation dans le bord de bande (1).

4. Bande transporteuse selon l'une quelconque des revendications précédentes, **caractérisée en ce qu'**une zone (4) qui est directement contigüe à la bande transporteuse (10) et qui est alignée parallèlement à la bande transporteuse présente une dureté plus élevée qu'une zone (5) qui est contigüe à cette zone (4) en pointant vers l'extérieur.

5. Bande transporteuse selon la revendication 4, **caractérisée en ce que** la zone de dureté plus élevée (4) entoure la bande transporteuse (10) à l'intérieur du bord de bande (1).

6. Bande transporteuse selon l'une quelconque des revendications 4 ou 5, **caractérisée en ce que** le bord de bande (1) est composé de deux parties différentes (4, 5).

7. Bande transporteuse selon l'une quelconque des revendications 4 à 6, **caractérisée en ce que** le bord de bande (1) présentant la zone de dureté moins élevée (5) et la zone de dureté plus élevée (4) est formé par co-extrusion.

8. Bande transporteuse selon l'une quelconque des revendications précédentes, **caractérisée en ce que** les fils du matériau résistant à la déchirure sont agencés dans un plan entre la zone de dureté plus élevée (4) et la zone de dureté moins élevée (5).

9. Bord de bande destiné à être joint sur une bande transporteuse, selon l'une des revendications précédentes, **caractérisée en ce que** des fils d'un matériau résistant à la déchirure sont agencés dans le bord de bande.

10. Convoyeur à bande comprenant au moins une bande transporteuse (10) selon l'une des revendications 1 à 8, comprenant au moins un bord de bande (1) disposé sur une extrémité de la bande transporteuse (10), **caractérisé en ce que** des fils d'un matériau résistant à la déchirure sont agencés dans le bord de bande (1).
